(19) Europäisches Patentamt / European Patent Office / Office européen des brevets

(11) **EP 2 143 640 B1**

(12) **FASCICULE DE BREVET EUROPEEN**

(45) Date de publication et mention
de la délivrance du brevet:
**07.09.2011 Bulletin 2011/36**

(51) Int Cl.:
***B64G 1/00*** *(2006.01)*   ***B64G 1/24*** *(2006.01)*
***B64G 1/64*** *(2006.01)*   ***B64G 1/10*** *(2006.01)*
***B64G 1/40*** *(2006.01)*

(21) Numéro de dépôt: **09305660.4**

(22) Date de dépôt: **08.07.2009**

(54) **Procédé de lancement, de mise à poste et de maintien à poste d'un satellite en orbite geo**

Verfahren zum Start, In-Position-Bringen und Positionsbeibehaltung eines Satelliten in eine
geostationäre Erdumlaufbahn

Method for the launch, station acquisition and station-keeping of a satellite in GEO orbit

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **10.07.2008 FR 0854707**

(43) Date de publication de la demande:
**13.01.2010 Bulletin 2010/02**

(73) Titulaire: **ASTRIUM SAS**
**75016 Paris (FR)**

(72) Inventeurs:
• **Gerber, Bernard**
**31650, St-Orens de Gameville (FR)**

• **Cougnet, Claude**
**31170, TOURNEFEUILLE (FR)**

(74) Mandataire: **Fourcade, Emmanuelle**
**Schmit-Chrétien SNC**
**Parc de Basso Cambo**
**4 Rue Paul Mesplé**
**31100 Toulouse (FR)**

(56) Documents cités:
**FR-A- 2 511 970**      **US-A1- 2002 179 775**
**US-A1- 2005 151 022**

**Description**

La présente invention appartient au domaine du lancement et de la mise à poste de véhicules spatiaux, plus particulièrement des véhicules spatiaux de type satellite destinés à être placés en orbite géostationnaire (appelée également orbite « GEO » pour « geostationary orbit » dans la littérature anglo-saxonne) pour effectuer leur mission.

De tels satellites, notamment les satellites de télécommunications ou d'observation, sont généralement lancés sur une orbite intermédiaire en utilisant un moyen de lancement tel qu'un lanceur conventionnel de la gamme d'Ariane 5.

Cette orbite intermédiaire est également appelée orbite de transfert géostationnaire (« geostationary transfer orbit » dans la littérature anglo-saxonne ou « GTO »). Le plus souvent, l'orbite GTO est très excentrique, avec un apogée d'altitude proche de celle de l'orbite GEO (c'est-à-dire proche de 35 786 km), soit légèrement inférieure, soit légèrement supérieure, et un périgée d'altitude basse (généralement aux environs de 200 km, suivant les caractéristiques du lanceur). D'autres orbites GTO sont encore plus excentriques, avec un apogée et un périgée d'altitude plus élevée (par exemple respectivement 50 000 km et 4000 km). Ce type d'orbites GTO dites « super-synchrones » permet en particulier de changer le plan de l'orbite à moindre coût pendant le transfert vers l'orbite géostationnaire.

Un satellite lancé sur une orbite GTO utilise un système de propulsion pour effectuer sa mise à poste au voisinage de la position sur ladite orbite GEO où il doit effectuer sa mission, ce qui consiste notamment à circulariser l'orbite GTO en orbite GEO.

Une fois la mise à poste effectuée, le satellite a tendance à s'écarter de la position idéale du fait notamment de forces perturbatrices extérieures, et le satellite utilise régulièrement le système de propulsion pour se maintenir à poste.

Deux types de propulsion sont le plus généralement utilisés à bord des satellites : propulsion chimique (généralement à hydrazine ou bi-liquide à base de peroxyde d'azote et de mono-méthyle-hydrazine) et/ou propulsion électrique.

De nos jours, les satellites de télécommunications ou d'observation, lancés sur une orbite GTO sont généralement munis d'un système de propulsion entièrement chimique, le plus souvent bi-liquide.

En effet, bien que d'un rendement propulsif moins bon que celui de la propulsion électrique (typiquement un facteur de 5 à 15 sur l'impulsion spécifique), la propulsion bi-liquide produit des poussées typiquement 1000 fois plus fortes que celles produites par propulsion électrique, ce qui est particulièrement avantageux pour réduire le temps nécessaire pour la mise à poste du satellite sur l'orbite GEO (approximativement trois jours avec une propulsion bi-liquide contre plusieurs mois avec une propulsion électrique).

La durée de la mise à poste est un facteur important notamment pour limiter les dégradations subies par ledit satellite au cours du transfert de l'orbite GTO vers l'orbite GEO, liées notamment à la traversée par l'orbite GTO des ceintures de radiation de Van Allen, mais également pour des raisons économiques puisque la mission du satellite ne débute réellement qu'une fois la mise à poste effectuée.

Le maintien du satellite à poste ne nécessite pas des poussées importantes comme pour la mise à poste, et peut être assuré par une propulsion électrique. Cependant, les moyens de propulsion bi-liquide déjà embarqués pour la mise à poste sont généralement utilisés, car l'ajout d'un système de propulsion électrique, exigeant par ailleurs une puissance embarquée très importante, rendrait le satellite plus complexe.

L'utilisation de l'injection en orbite de transfert GTO est proposée par la majorité des lanceurs lourds mondiaux car la quantité d'énergie nécessaire pour lancer un satellite sur cette orbite est largement inférieure à la quantité d'énergie nécessaire pour lancer un satellite sur l'orbite GEO, et car un lancement sur une telle orbite de transfert ne nécessite pas de ré-allumage de l'étage supérieur des lanceurs.

Toutefois, le satellite doit embarquer une masse supplémentaire d'ergols pour circulariser l'orbite de transfert en orbite GEO, en produisant un incrément de vitesse généralement compris entre 1500 m/s et 1800 m/s.

Par exemple, pour un satellite de masse sèche de 3 tonnes, environ 2250kg d'ergols sont généralement nécessaires pour circulariser l'orbite GTO classique (périgée aux environs des 200km, apogée proche de l'orbite GEO), et 50 à 70 kg/an d'ergols sont nécessaires pour assurer le maintien à poste. En considérant une durée de mission de 15 ans, entre 750 kg et 1 tonne d'ergols sont embarqués pour le maintien à poste du satellite. La masse totale (c'est-à-dire ladite masse d'ergols plus la masse sèche du satellite) du satellite au lancement avoisine les 6 tonnes, mais la masse sèche du satellite représente à peine 50% de la masse totale, la masse de la charge utile du satellite représentant une part encore inférieure.

La durée de mission est généralement déterminée par la masse d'ergols embarquée pour assurer le maintien à poste. Celle-ci est déterminée en considérant à la fois le coût de lancement de ladite masse d'ergols et la probabilité de panne du satellite en fonction de la durée de mission, tout en cherchant à maximiser la part de la masse de la charge utile dans la masse totale du satellite. Ainsi, il n'est pas rare d'avoir des satellites sur orbite dont la charge utile est encore opérationnelle et qui deviennent inutilisables du fait que les ergols sont épuisés.

On connait de la demande de brevet FR 2 511 970 un dispositif de ravitaillement pour un satellite en orbite GEO. On connait également de la demande de brevet US 2005/0151022 un dispositif de transport adapté à transporter un satellite depuis une orbite GTO vers l'orbite GEO.

A moyen de lancement équivalent, il n'est pas connu de procédé permettant, pour un satellite à propulsion chimique lancé sur orbite GTO et destiné à être placé sur orbite GEO, d'augmenter significativement la part de la masse sèche dans la masse totale dudit satellite, tout en prolongeant la durée de mission dudit satellite.

La présente invention propose de résoudre les problèmes susmentionnés en introduisant un procédé de lancement et de mise à poste d'un satellite comportant une propulsion chimique, dans lequel le satellite est d'abord lancé sur une orbite GTO qui est circularisée en orbite GEO sur laquelle le satellite est mis à poste pour effectuer une mission.

Selon l'invention, une quantité totale d'ergols nécessaire au satellite pour effectuer la mise à poste en orbite GEO et le maintien à poste pendant au moins la durée prévue de la mission est transportée par deux moyens distincts : une première quantité d'ergols, correspondant à une masse $m_{E1}$ nécessaire au satellite pour effectuer au moins la mise à poste en orbite GEO, est transportée par le satellite, et une seconde quantité d'ergols, correspondant à une masse $m_{E2}$ nécessaire pour assurer le maintien à poste en orbite GEO du satellite pendant au moins la durée prévue de la mission, est transportée par un ravitailleur. La seconde quantité d'ergols est transférée depuis le ravitailleur au satellite en orbite GEO en une seule fois, afin de minimiser le nombre de rendez-vous et les indisponibilités du satellite ravitaillé pendant la période de ravitaillement. '

De préférence, la première quantité d'ergols est déterminée pour assurer le maintien à poste en orbite GEO du satellite pendant une période intermédiaire de durée sensiblement inférieure à la durée prévue de la mission, et la seconde quantité d'ergols est déterminée pour assurer le maintien à poste en orbite GEO au-delà de la période intermédiaire, jusqu'à la fin de la durée prévue de la mission.

Le ravitailleur est lancé à moindre coût sur une orbite de transfert, étant de préférence l'orbite GTO du satellite, et est mis à poste sur une orbite d'attente au voisinage de ladite orbite GEO en utilisant une propulsion de rendement propulsif plus élevé que celui de la propulsion chimique du satellite, de préférence une propulsion électrique. Dans un mode particulier, l'orbite d'attente est l'orbite GEO.

Suivant l'invention, la mise à poste en orbite d'attente du ravitailleur s'achève avant la mise à poste en orbite GEO du satellite, par exemple dans le cas d'une période intermédiaire de durée inférieure à six mois, ou après la mise à poste en orbite GEO du satellite au cours de la période intermédiaire, notamment si la durée de la période intermédiaire est supérieure à la durée de mise à poste du ravitailleur, de préférence comprise entre 1 an et 3 ans. Dans ce dernier cas, le ravitailleur peut être lancé postérieurement ou simultanément à la mise à poste du satellite en orbite GEO, et son lancement peut être conditionné au succès de la mise à poste dudit satellite.

Avantageusement, une masse totale $m_T$ du satellite au lancement est déterminée de sorte que :

$$m_T \leq M < m_T + m_{E2}$$

où M est la masse correspondant à une capacité disponible de lancement en orbite GTO du lanceur considéré.

Avantageusement, la seconde quantité d'ergols est déterminée pour assurer une durée prévue de la mission du satellite égale ou supérieure à 15 ans.

Avantageusement, le ravitailleur embarque des secondes quantités d'ergols pour une pluralité de satellites.

Pour prolonger le maintien à poste du satellite après la fin de la durée prévue de la mission, le ravitailleur transfère une quantité supplémentaire d'ergols au satellite avant la fin de la durée prévue de la mission, ou s'amarre au satellite pour assurer le maintien à poste en orbite GEO du satellite.

De préférence, le ravitailleur place le satellite sur une orbite de rebut lorsque la mission du satellite est achevée.

La description suivante de modes de l'invention est faite en se référant aux figures, dans lesquelles des références identiques désignent des éléments identiques ou analogues, qui représentent de manière non limitative :

- Figure 1 : une vue schématique d'un satellite selon l'invention,
- Figure 2 : une vue schématique d'un ravitailleur selon l'invention,
- Figure 3: une représentation schématique d'un système comportant une pluralité de satellites et un ravitailleur en orbite.

La présente invention trouve application dans le domaine des satellites comportant une propulsion chimique destinés à être placés sur orbite géostationnaire (GEO) et lancés sur une orbite intermédiaire de transfert géostationnaire (GTO), et concerne notamment un procédé de lancement et de mise à poste sur orbite GEO d'un tel satellite.

Suivant l'invention, une quantité totale d'ergols nécessaire à un satellite 1 comportant une propulsion chimique pour effectuer sa mise à poste et son maintien à poste sur orbite GEO pendant une durée prévue de mission est lancée avec deux moyens distincts :

- une première quantité est lancée à bord du satellite 1,
- une seconde quantité est lancée à bord d'un véhicule séparé dit ravitailleur 2, ladite seconde quantité d'ergols étant transférée en une seule fois du ravitailleur 2 vers le satellite 1 après la mise en orbite GEO dudit satellite.

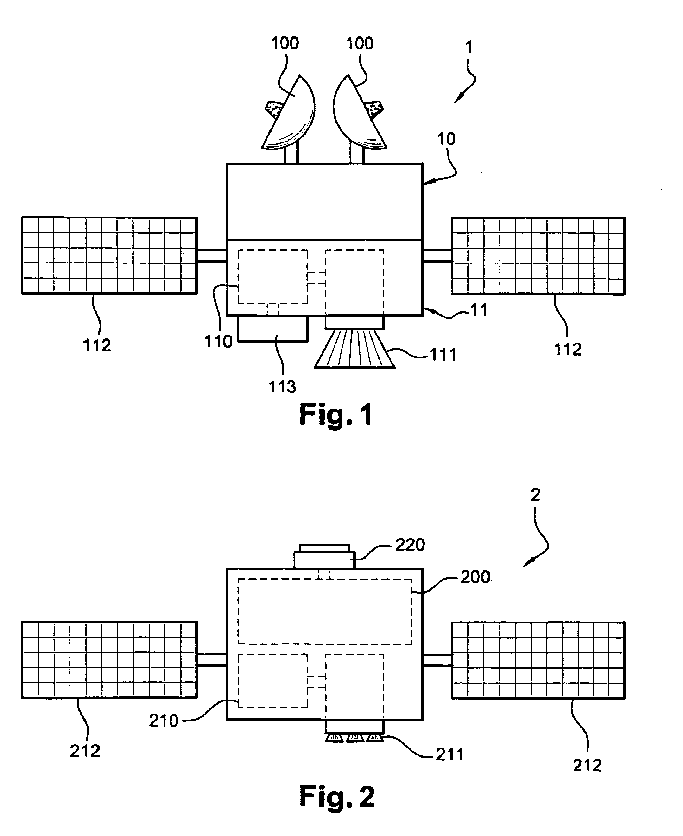

De manière conventionnelle, le satellite 1, représenté sur la figure 1, se décompose fonctionnellement en deux sous-ensembles essentiels : une charge utile 10 et une plateforme 11.

La charge utile 10 correspond aux équipements spécifiques dédiés à la mission du satellite 1. Par exemple, dans le cas d'un satellite de télécommunications, la charge utile 10 comporte notamment des antennes 100, mais également des transpondeurs et amplificateurs, non représentés, pour la conversion en fréquence d'ondes radioélectriques reçues de la Terre, et la réémission après traitement desdites ondes en direction de la Terre.

La plateforme 11 forme généralement la structure du satellite 1 et regroupe un ensemble d'équipements génériques pour contrôler la position sur orbite et l'attitude du satellite 1, pour assurer l'alimentation électrique dudit satellite (notamment de la charge utile 10), pour établir une communication de contrôle avec la Terre, etc.

Par exemple, la plateforme 11 comporte des panneaux solaires 112 pour alimenter électriquement la charge utile 10.

La plateforme 11 comporte également un système de propulsion chimique comportant un ou des réservoirs 110 pour embarquer la première quantité d'ergols, par exemple de l'hydrazine ou un couple de peroxyde d'azote et de mono-méthyle-hydrazine (bi-liquide), et un moteur 111. Afin d'assurer l'alimentation en ergols du moteur 111, le système de propulsion comporte généralement également un réservoir de gaz pressurisant, non représenté. Dans l'exemple non limitatif de la figure 1, le satellite 1 comporte un seul réservoir 110.

Le satellite 1 comporte également un système de transfert d'ergols 113, pour le transfert de la seconde quantité d'ergols depuis ledit ravitailleur, vers le réservoir 110.

Le ravitailleur 2 comporte un ou des réservoirs 200 pour embarquer au moins la seconde quantité d'ergols du satellite 1, et de préférence apte à recevoir des secondes quantités d'ergols pour une pluralité de satellites du même type que celui du satellite 1. Dans l'exemple non limitatif de la figure 2, le ravitailleur 2 comporte un seul réservoir 200.

Le ravitailleur 2 comporte également un système de propulsion, qui sera décrit plus loin.

Le ravitailleur 2 comporte également un système de transfert d'ergols 220, adapté au système de transfert d'ergols 113, pour transférer la seconde quantité d'ergols depuis le réservoir 200 vers le réservoir 110 du satellite 1.

Les systèmes de transfert d'ergols 113 et 220 effectuent un transfert d'ergols soit au contact, et le satellite 1 et le ravitailleur 2 sont par exemple munis de dispositifs d'amarrage, soit à distance par exemple au moyen d'une perche de ravitaillement.

Selon le procédé de l'invention, le satellite 1 est lancé sur une orbite GTO, au moyen d'un lanceur, en embarquant dans le réservoir 110 la première quantité d'ergols nécessaire pour la mise à poste dudit satellite (et en particulier pour circulariser l'orbite GTO en orbite GEO) et pour le maintien à poste dudit satellite pendant une période intermédiaire de la mission de durée significativement inférieure à la durée prévue de la mission. La durée prévue de la mission est de préférence égale ou supérieure à 15 ans, la durée de la période intermédiaire est de préférence inférieure à 3 ans. La première quantité d'ergols représente une masse $m_{E1}$.

Le satellite 1 a une masse totale au lancement notée $m_T$, correspondant à la masse sèche du satellite 1, notée $m_S$, plus la masse d'ergols $m_{E1}$ effectivement embarquée.

Le satellite 1 est ravitaillé par le ravitailleur 2, de préférence au cours de la période intermédiaire, par le transfert en une seule fois de la seconde quantité d'ergols, représentant une masse $m_{E2}$, nécessaire pour maintenir ledit satellite à poste pendant au moins la durée restante de la durée prévue de la mission.

En transférant la seconde quantité d'ergols en une seule fois, le nombre de rendez-vous entre le ravitailleur 2 et le satellite 1 est minimal, ce qui est avantageux pour plusieurs raisons. D'une part les risques d'endommagements du satellite 1 par le ravitailleur 2, liés aux manoeuvres complexes qu'ils doivent réaliser pour effectuer le rendez-vous, sont limités. D'autre part, la durée de l'indisponibilité du satellite 1, c'est-à-dire l'interruption de la mission dudit satellite qui accompagne vraisemblablement le ravitaillement, est également limitée.

Dans l'exemple déjà décrit d'un satellite de masse sèche de 3 tonnes, la masse d'ergols nécessaire pour la mise à poste est d'approximativement 2 tonnes (contre 2250 kg auparavant du fait que la masse totale devant être mise à poste est inférieure car les ergols pour maintenir le satellite à poste ne sont pas tous embarqués en totalité) et il faut approximativement 200 kg pour le maintien à poste pendant une période intermédiaire de 3 ans. La part de la masse sèche dans la masse totale du satellite est proche de 58% contre 50% auparavant, pour une masse totale d'approximativement 5200 kg contre 6 tonnes.

A masse sèche $m_S$ constante, la masse totale $m_T$ lancée est plus faible qu'avec un procédé de lancement et de mise à poste conventionnel.

A masse totale maximale donnée, notée M, correspondant généralement à la capacité de lancement en orbite GTO du lanceur considéré pour lancer le satellite, la masse totale $m_T$ du satellite 1 est avantageusement déterminée par conception du satellite de sorte que $m_T \leq M < m_T + m_{E2}$. Le remplissage en masse du lanceur est optimisé, et le satellite 1 est lancé avec un lanceur qui n'aurait pas pu lancer un satellite de masse sèche $m_S$ équivalente avec un procédé de lancement et de mise à poste conventionnel.

De plus, à masse totale maximale M donnée, la masse sèche lancée est supérieure à celle qui aurait été lancée suivant un procédé de lancement et de mise à poste conventionnel. Cela autorise le lancement avec un lanceur donné d'un satellite de charge utile capable d'effectuer une mission plus complexe.

Il est à noter que la masse totale maximale M correspond à la capacité disponible du lanceur considéré, c'est-à-dire la capacité totale dans le cas où le lanceur lance uniquement le satellite 1, ou la capacité restante dans le cas où le lanceur est utilisé pour lancer plusieurs véhicules spatiaux.

De préférence, la taille du réservoir 110 (ou la taille des réservoirs 110 dans le cas d'une pluralité de réservoirs) dont est muni le satellite 1 est limitée par conception pour recevoir au plus le volume représenté par la masse $m_{E1}$, ou la masse $m_{E2}$ d'ergols si elle est supérieure à $m_{E1}$. Cela présente l'avantage de réduire davantage la masse totale $m_T$ du fait d'une réduction des dimensions du réservoir 110 et éventuellement de la masse de la structure du satellite.

Dans l'exemple déjà décrit d'un satellite de masse sèche 3 tonnes, le réservoir 110 a dans ce cas une capacité d'environ 2200 kg. En considérant qu'il faut entre 50 et 70 kg/an d'ergols pour le maintien à poste et qu'au moins 2 tonnes d'ergols ont été consommées au moment du ravitaillement, il est envisageable d'un point de vue capacité d'ergols de prévoir des durées de mission de plus de 25 ans (en considérant une masse $m_{E2}$ d'ergols d'environ 2000 kg, inférieure à la capacité du réservoir 110), qui sont donc largement supérieures aux durées de mission actuelles qui sont généralement comprises entre 10 et 15 ans.

Selon le procédé, le ravitailleur 2 est mis à poste en parallèle sur une orbite d'attente, étant de préférence l'orbite GEO ou une orbite d'altitude voisine de celle de l'orbite GEO sur laquelle se trouve le satellite 1.

Par « en parallèle », il faut comprendre que la mise à poste du ravitailleur 2 s'effectue de préférence avant épuisement de la première quantité d'ergols (masse $m_{E1}$) dudit satellite, pour effectuer le transfert de la seconde quantité d'ergols (masse $m_{E2}$) vers ledit satellite avant ledit épuisement.

Le ravitailleur 2 est lancé au moyen d'un lanceur, différent ou pas du lanceur utilisé pour lancer le satellite 1. Le ravitailleur 2 est de préférence lancé sur orbite de transfert, cette orbite de transfert étant ou pas la même que celle sur laquelle le satellite 1 est lancé.

Pour passer de l'orbite de transfert sur laquelle il est lancé vers l'orbite d'attente, le ravitailleur 2 utilise avantageusement une propulsion de rendement propulsif plus élevé que la propulsion chimique du satellite 1.

De préférence, le ravitailleur 2 utilise une propulsion électrique pour effectuer le transfert vers l'orbite d'attente, et comporte par exemple un ou des réservoirs 210 (un dans l'exemple non limitatif de la figure 2) embarquant du xénon, des propulseurs électriques 211 et des panneaux solaires 212.

Dans une variante, le système de propulsion du ravitailleur 2 est hybride, et comporte également une propulsion chimique, par exemple à base d'hydrazine, notamment pour effectuer le ou les rendez-vous avec le ou les satellites 1 à ravitailler.

La propulsion électrique, on l'a vu, a un rendement propulsif significativement plus important que celui de la propulsion chimique (typiquement d'un facteur de 5 à 15 sur l'impulsion spécifique), et la mise à poste de la seconde quantité d'ergols (masse $m_{E2}$) est plus efficace que la mise à poste de la première quantité d'ergols par le satellite 1 utilisant une propulsion chimique.

La mise à poste de la masse d'ergols $m_{E2}$ dure le cas échéant plusieurs mois, mais sans impact sur la mission du satellite 1, qui embarque des ergols pour son maintien à poste pendant la période intermédiaire.

La durée de la période intermédiaire est un paramètre d'ajustement des masses $m_{E1}$ et $m_{E2}$ en fonction des contraintes de lancement (masse totale M, masse sèche $m_S$, etc.), et autorise une marge temporelle sur le lancement du ravitailleur 2 et sur le ravitaillement du satellite 1. La durée de la période intermédiaire est de préférence inférieure à 3 ans.

Par exemple, en considérant une durée de mise à poste avec une propulsion électrique de 6 mois, et une première quantité d'ergols dans le réservoir 110 du satellite 1 pour un maintien à poste pendant 1 an, un lancement du ravitailleur 2 postérieur ou simultané au lancement du satellite 1, voire postérieur ou simultané à la mise à poste du satellite 1 en orbite GEO, autorise néanmoins le ravitaillement dudit satellite avant épuisement de la première quantité d'ergols.

A contrario, en considérant une première quantité d'ergols dans le réservoir 110 du satellite 1 pour un maintien à poste de moins de 6 mois (par exemple pour minimiser la masse totale $m_T$ au lancement), le ravitailleur 2 est lancé avant le satellite 1.

Avantageusement, le procédé selon l'invention autorise le conditionnement du ravitaillement du satellite 1 au bon déroulement de la mission pendant au moins une partie de la période intermédiaire de la mission. Si le satellite 1 n'est pas opérationnel et ne pourra pas effectuer sa mission pendant la durée prévue, il n'est pas ravitaillé par le ravitailleur 2 en orbite d'attente et/ou le ravitailleur 2 n'est pas lancé. Il est préférable dans ce cas de lancer le satellite 1 avec à son bord une première quantité d'ergols (masse $m_{E1}$) suffisante pour assurer un maintien à poste pendant une période intermédiaire dont la durée est égale ou supérieure à 1 an.

Dans un mode préféré de mise en oeuvre du procédé, le ravitailleur 2 ravitaille une pluralité de satellites 1.

Dans ce mode, chaque satellite 1 est lancé sur une orbite GTO avec une première quantité d'ergols nécessaire pour sa mise à poste et son maintien à poste sur orbite GEO pendant une période intermédiaire, et est ravitaillé en une seule fois par le ravitailleur 2 avant la fin de sa période intermédiaire avec une seconde quantité d'ergols suffisante pour se maintenir à poste pendant la durée prévue de la mission.

Le ravitailleur 2, lancé et mis à poste comme décrit précédemment, embarque au moins les secondes quantités d'ergols nécessaires auxdits satellites, et est de préférence maintenu à poste sur l'orbite d'attente à une position voisine desdits satellites, par exemple à quelques dizaines de kilomètres desdits satellites.

L'invention concerne également un procédé de prolongement du maintien à poste du satellite 1, lancé et mis à poste suivant le procédé déjà décrit.

Suivant le procédé de prolongement du maintien à poste, le satellite 1 est ravitaillé par le ravitailleur 2 avant la fin de la durée prévue initiale de la mission, avec une quantité supplémentaire d'ergols nécessaire pour assurer un prolongement de mission d'une durée par exemple comprise entre 2 et 5 ans.

Selon un autre mode du procédé de prolongement du maintien à poste, le ravitailleur 2 prolonge la mission du satellite 1 en s'amarrant audit satellite et en prenant en charge le maintien à poste dudit satellite en utilisant son propre système de propulsion.

De préférence, le ravitailleur 2, amarré au satellite 1, transfère ledit satellite sur une orbite de rebut lorsque la mission est achevée.

L'invention concerne également un système comportant un ravitailleur 2 et une pluralité de satellites 1. Chaque satellite 1 est lancé sur une orbite GTO et embarquant au lancement une quantité d'ergols nécessaire pour sa mise à poste sur orbite GEO et pour son maintien à poste pendant une période intermédiaire de sa mission, et le ravitailleur 2 est lancé avec à son bord au moins des secondes quantités d'ergols nécessaires auxdits satellites pour se maintenir à poste pendant les durées prévues de leurs missions respectives.

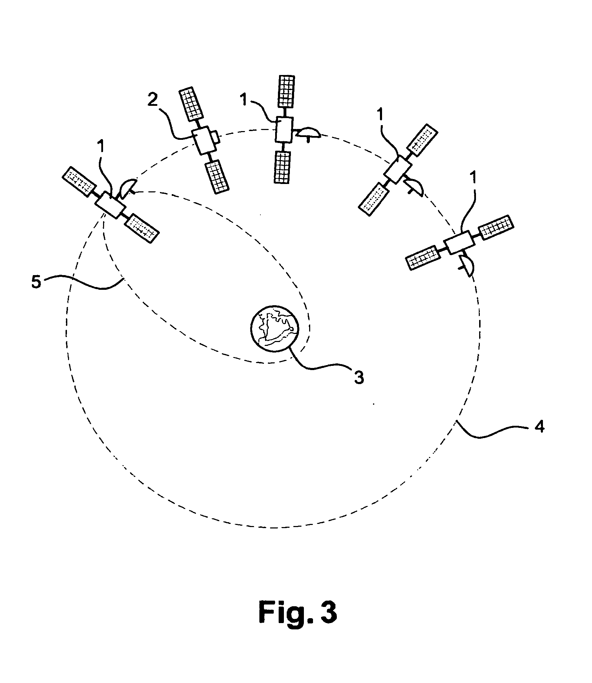

Un tel système est représenté de façon schématique sur la figure 3, dans laquelle la Terre est désignée par la référence 3 et l'orbite GEO est désignée par la référence 4. Un exemple non limitatif d'orbite GTO est également représenté et désigné par la référence 5 (d'autres orbites GTO, non représentées, sont envisageables, par exemple des orbites GTO de type supersynchrone dont l'apogée serait d'altitude nettement plus grande que celle de l'orbite géostationnaire).

Le procédé de lancement et de mise à poste selon l'invention permet de lancer des satellites pour lesquels la part de la masse sèche par rapport à la masse totale au lancement est augmentée par rapport aux procédés conventionnels. Ce procédé permet également de prévoir des durées de mission de plus de 15 ans, ce qui est supérieur aux durées de vie généralement retenues, sans pénaliser la masse sèche du satellite. Le procédé permet également de prolonger la mission de satellites qui arrivent au terme de leur mission prévue au lancement.

**Revendications**

1. Procédé de lancement et de mise à poste d'un satellite (1) comportant une propulsion chimique, dans lequel le satellite est lancé sur une orbite de transfert géostationnaire, dite « orbite GTO », laquelle orbite GTO (5) est circularisée en une orbite géostationnaire dite « orbite GEO » sur laquelle le satellite (1) est mis à poste pour effectuer une mission, une quantité totale d'ergols nécessaire au satellite (1) pour effectuer la mise à poste en orbite GEO (4) depuis l'orbite GTO et le maintien à poste pendant une durée prévue de la mission étant transportée par deux moyens distincts :

- une première quantité d'ergols, correspondant à une masse $m_{E1}$ nécessaire au satellite (1) pour effectuer la circularisation de l'orbite GTO (5) en orbite GEO (4) et le maintien à poste pendant une période intermédiaire de durée significativement inférieure à la durée prévue de la mission, est transportée par le satellite (1),
- une seconde quantité d'ergols, correspondant à une masse $m_{E2}$ nécessaire pour assurer le maintien à poste en orbite GEO (4) du satellite (1) pendant au moins la durée restante de la durée prévue de la mission, est transportée par un ravitailleur (2), la seconde quantité d'ergols étant transférée depuis le ravitailleur (2) au satellite (1) en orbite GEO (4) en une seule fois, **caractérisé**

**en ce que** le ravitailleur (2) est lancé sur une orbite de transfert et effectue sa mise à poste sur une orbite d'attente au voisinage de l'orbite GEO (4) en utilisant une propulsion de rendement propulsif plus élevé que celui de la propulsion chimique du satellite (1).

2. Procédé selon la revendication 1, dans lequel l'orbite de transfert sur laquelle le ravitailleur (2) est lancé est l'orbite GTO sur laquelle le satellite (1) est lancé.

3. Procédé selon la revendication 1 ou 2, dans lequel le ravitailleur (2) utilise une propulsion électrique pour effectuer sa mise à poste en orbite d'attente.

4. Procédé selon l'une des revendications 1 à 3, dans lequel la mise à poste en orbite d'attente du ravitailleur (2) s'achève avant la mise à poste en orbite GEO (4) du satellite (1).

5. Procédé selon l'une des revendications 1 à 3, dans lequel la mise à poste en orbite d'attente du ravitailleur (2) s'achève après la mise à poste en orbite GEO (4) du satellite (1), au cours de la période intermédiaire.

6. Procédé selon l'une des revendications précédentes, dans lequel la durée de la période intermédiaire est comprise entre 1 an et 3 ans.

**7.** Procédé selon l'une des revendications précédentes, dans lequel une masse totale $m_T$ du satellite (1) au lancement est déterminée de sorte que $m_T \leq M < m_T + m_{E2}$, M étant la masse correspondant à une capacité disponible de lancement en orbite GTO (5) d'un lanceur donné.

**8.** Procédé selon l'une des revendications précédentes, dans lequel la seconde quantité d'ergols est déterminée pour assurer une durée prévue de la mission du satellite (1) égale ou supérieure à 15 ans.

**9.** Procédé selon l'une des revendications précédentes, dans lequel le ravitailleur (2) embarque des secondes quantités d'ergols pour une pluralité de satellites (1), qui sont transférées auxdits satellites en orbite GEO (4).

**10.** Procédé de lancement, de mise à poste et de maintien à poste d'un satellite (1), dans lequel ledit satellite est lancé sur orbite GTO (5) et mis à poste en orbite GEO (4) suivant le procédé selon l'une des revendications 1 à 9, et dans lequel le ravitailleur (2) transfère une quantité supplémentaire d'ergols au satellite (1) avant la fin de la durée prévue de la mission pour prolonger la mission après la fin de ladite durée prévue.

**11.** Procédé de lancement, de mise à poste et de maintien à poste d'un satellite (1), dans lequel ledit satellite est lancé sur orbite GTO (5) et mis à poste en orbite GEO (4) suivant le procédé selon l'une des revendications 1 à 9, et dans lequel le ravitailleur (2) s'amarre au satellite (1) et assure le maintien à poste en orbite GEO (4) dudit satellite.

**12.** Procédé selon la revendication 10 ou 11, dans lequel le ravitailleur (2) place le satellite (1) sur une orbite de rebut lorsque la mission dudit satellite est achevée.

**Claims**

**1.** A method for the launch and station acquisition of a satellite (1) comprising chemical propulsion, in which the satellite is launched into a geostationary transfer orbit, known as a "GTO orbit", this GTO orbit (5) being circularised into a geostationary orbit known as a "GEO orbit" in which the satellite (1) is stationed to perform a mission, a total quantity of propellant required by the satellite (1) to perform station acquisition in GEO orbit (4) from the GTO orbit and station-keeping for the planned duration of the mission being transported by two distinct means:

- a first quantity of propellant, corresponding to a mass $m_{E1}$ required by the satellite (1) to circularise the GTO orbit (5) into a GEO orbit (4) and keep station for an intermediate period of time significantly shorter than the planned duration of the mission, is transported by the satellite (1),
- a second quantity of propellant, corresponding to a mass $m_{E2}$ required to ensure station-keeping in the GEO orbit (4) of the satellite (1) for at least the remaining duration of the planned duration of the mission, is transported by a tanker (2), the second quantity of propellant being transferred from the tanker (2) to the satellite (1) in GEO orbit (4) in a single operation,

**characterised in that** the tanker (2) is launched into a transfer orbit and performs its station acquisition in a parking orbit near to the GEO orbit (4) by using a propulsion of propulsive efficiency higher than that of the chemical propulsion of the satellite (1).

**2.** A method according to claim 1, wherein the transfer orbit into which the tanker (2) is launched is the GTO orbit into which the satellite (1) is launched.

**3.** A method according to claim 1 or 2, wherein the tanker (2) uses electrical propulsion to perform its station acquisition in the parking orbit.

**4.** A method according to one of claims 1 to 3, wherein the station acquisition of the tanker (2) in the parking orbit is completed before the station acquisition of the satellite (1) in the GEO orbit (4).

**5.** A method according to one of claims 1 to 3, wherein the station acquisition of the tanker (2) in the parking orbit is completed after the station acquisition of the satellite (1) in the GEO orbit (4), during the intermediary period.

**6.** A method according to one of the previous claims, wherein the duration of the intermediary period is comprised between 1 and 3 years.

**7.** A method according to one of the previous claims, wherein a total mass $m_T$ of the satellite (1) upon launching, is determined so that $m_T \leq M < m_T + m_{E2}$, M being the mass corresponding to an available GTO orbit (5) launching capacity (5) of a given launch vehicle.

**8.** A method according to one of the previous claims, wherein the second quantity of propellant is determined to ensure a planned duration of the mission of the satellite (1) equal or greater than 15 years.

**9.** A method according to one of the previous claims, wherein the tanker (2) carries on-board second quantities of propellant for a plurality of satellites (1), which are transferred to said satellites in GEO orbit (4).

10. A method for the launch, station acquisition and station-keeping of a satellite (1), in which said satellite is launched into a GTO orbit (5) and stationed in a GEO orbit (4) as per the method according to one of claims 1 to 9, and wherein the tanker (2) transfers an additional quantity of propellant to the satellite (1) before the end of the planned duration of the mission so as to extend the mission after the end of said planned duration.

11. A method for the launch, station acquisition and station-keeping of a satellite (1), wherein said satellite is launched into a GTO orbit (5) and stationed in a GEO orbit (4) as per the method according to one of claims 1 to 9, and wherein the tanker (2) docks with the satellite (1) and ensures the station-keeping of said satellite in the GEO orbit (4).

12. A method according to claim 10 or 11, wherein the tanker (2) places the satellite (1) in a disposal orbit when the mission of said satellite is completed.

**Patentansprüche**

1. Verfahren zum Einleiten und Antreiben eines Satelliten (1) aufweisend einen chemischen Antrieb, in welchen der Satellit auf eine geostationäre Transferbahn "GTO Orbit" genannt geschossen wird, welchen GTO (5) Orbit in einen geostationäre Orbit "GEO" Orbit genannt, umkreist wird, auf welchen der Satellit (1) angetrieben ist, um eine Fahrt durchzuführen, eine vom Satelliten (1) benötigte Gesamtmenge von Treibmitteln, zum Antreiben vom GTO Orbit aus, in einen GEO (4) Orbit und um Lageerhaltung während eine geplante Fahrtzeit, wobei sie von zwei unterschiedlichen Mitteln transportiert wird :

   - eine erste Menge von Treibmitteln, entsprechend eine vom Satelliten (1) benötigte Masse $m_{E1}$ zum Umkreisen vom GTO (5) Orbit zu einem GEO (4) Orbit und zur Lageerhaltung während einen zwischen Zeitabschnitt mit einer Dauer, die wesentlich niedriger als die geplante Fahrtzeit ist , wird vom Satelliten (1) transportiert,
   - eine zweite Menge von Treibmitteln, entsprechend eine benötigte Masse $m_{E2}$, um die Lageerhaltung in GEO (4) Orbit des Satelliten zu sichern während mindestens der restlichen Dauer der geplanten Fahrtzeit, wird von einem Versorger (2) transportiert, wobei die zweite Menge von Treibmitteln, vom Versorger (2) aus, im selben Zug, zum Satelliten (1) in GEO Orbit weitergeleitet wird , **dadurch gekennzeichnet, dass**

der Versorger (2) auf einen weiterleitende Orbit angetrieben ist und seinen Antrieb auf einen Warte-Orbit nahe der GEO (4) Orbit durch die Benutzung von einem Antrieb eines Leistungsantrieb, der höher als des der Satelliten (1) chemische Antrieb ist, durchführt.

2. Verfahren nach Patentanspruch 1, in welchen die Transferbahn auf dem der Versorger (2) angetrieben ist, ist der GTO Orbit auf dem der Satellit (1) eingeleitet ist.

3. Verfahren nach Patentanspruch 1 oder 2, in welchen der Versorger (2) einen elektrischen Antreiber verwendet zum Antreiben in Warte Orbit.

4. Verfahren nach einem der Patentansprüche 1 bis 3, in welchen die Antreibung in Warte Orbit des Versorgers (2) sich vor dem antrieb in GEO (4) Orbit des Satelliten (1) beendet.

5. Verfahren nach einem der Patentenansprüche 1 bis 3, in welchen die Antreibung in Warte Orbit des Versorgers (2) sich nach dem Antreiben in GEO (4) Orbit des Satelliten (1), während der zwischen Periode beendet.

6. Verfahren nach einem der vorherigen Patentenansprüche, in welchen die zwischen Zeitabschnitt, 1 bis 3 Jahren entspricht.

7. Verfahren nach einem der vorherigen Patentenansprüche, in welchen eine gesamt Masse $m_\tau$ des Satelliten (1) beim Einleiten festgelegt ist so, dass $m_T \le M < m_T + m_{E2}$, wobei M die entsprechende Masse einen in GTO (5) Orbital Antreiben verfügbare Antriebkraft einen gegebenen Antreiber ist

8. Verfahren nach einem der vorherigen Patentansprüche, in welchen die zweite Menge von Treibmitteln festgelegt ist, um eine Satelliten Fahrtzeit die gleich oder über 15 Jahren ist zu entsprechen.

9. Verfahren nach einem der vorherigen Patentenansprüche, in welchen der Versorger (2) zweiten Treibmitteln Mengen verladet für eine Satelliten (1) Vielfältigkeit, die an die so genannten Satelliten in GEO (4) Orbit weitergeleitet werden.

10. Verfahren zum Einleiten, Antrieb und zur Lageerhaltung eines Satelliten (1), in welchen dieser Satellit auf GTO (5) Orbit eingeleitet wird und in GEO (4) Orbit Angetrieben wird nach dem Verfahren nach einem der Patentenansprüche 1 bis 9 und in welchen der Versorger (2) eine zusätzliche Menge von Treibmitteln am Satelliten (1) vor Ende der geplante Fahrtzeit weiterleitet, um die Fahrt nach Ende der genannte geplante Dauer zu verlängern.

11. Verfahren zum Einleiten, Antrieb und zur Lageerhaltung eines Satelliten (1), in welchen der so genannte Satellit auf GTO (5) Orbit geschossen wird und in GEO (4) Orbit angetrieben wird nach dem Verfahren nach einem der Patentenansprüche 1 bis 9 in welchen der Versorger (2) sich am Satellit (1) verankert und die Lageerhaltung in GEO (4) Orbit des genannten Satellit sichert.

12. Verfahren nach Patentanspruch 10 oder 11, in welchen der Versorger (2) dem Satelliten (1) auf einen Entsorgungsorbit stellt, wenn die Fahrt der genannte Satellit beendet ist.

100    100    1

10

112    110    11    112

113    111

**Fig. 1**

2

220

200

210

212    211    212

**Fig. 2**

**Fig. 3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2511970

- US 20050151022 A